# EUROPEAN PATENT APPLICATION

(11) **EP 1 256 877 A1**
(43) Date of publication of application: **13.11.2002**
(21) Application number: 01410048.1
(22) Date of filing: 10.05.2001
(51) Int. Cl.: G06F 9/445

(54) **Manufacture of computer systems**

(71) Applicant: Hewlett-Packard Company, A Delaware Corporation, Palo Alto, CA 94304 (US)
(72) Inventor: Owhadi, Eric, 38360 Sassenage (FR)
(74) Representative: Lloyd, Richard Graham

(57) **Abstract**

The present invention relates to computer systems and in particular to a file distribution method and method of manufacture by which a file, representing, for example, software, that has not been approved from quality assurance perspective is loaded, before shipment of a computer (212), onto a storage medium of that computer and after shipment, the file or software is enabled (228) to allow it to be utilised appropriately. The embodiments of the invention confer at least two advantages. Firstly, the conventional software quality assurance approval process is avoided, which leads to the avoidance of potential delays in the manufacture of a computer system, and, secondly, the conventional downloads associated with obtaining on-line support and maintenance are avoided.

## Description

The present invention relates to computer systems and, more particularly, to file distribution/processing and, in particular, to a method of distributing, for example, files for client computers as well as a method of manufacturing computers.

It will be appreciated by those skilled in the art, that computer support and maintenance, in particular if it involves sending technically trained personnel to a customer site, represents a significant financial burden for the suppliers of any such support and maintenance. Therefore, within today's web-enabled environment, it is common practice for the vast majority of computer manufacturers to provide, to the maximum extent they possibly can, such support and maintenance using web servers. Typically, upon accessing a maintenance and support web-server page, a customer is required to download a program that can be used for diagnostics or trouble-shooting to identify and, preferably, fix any technical issues which need to be addressed. It will be appreciated that in some instances any such diagnostics software must be comprehensive in its functionality, that is, it must be capable of identifying and fixing a wide range of possible problems. Accordingly, it is not uncommon for such diagnostics software to comprise more than, for example, 5Mb. The download from a web-server of 5Mb, even at modest modem or network data rates, may take at least 30 minutes to 1 hour.

An alternative manner of guaranteeing that a customer has access to suitable trouble-shooting software is to ensure that the trouble-shooting software is already resident, that is, is pre-loaded, on the customer's computer. However, a typical computer manufacturing cycle involves a significant degree of quality assurance testing in terms of both hardware and software before a client machine and associated software to be loaded onto the client machine are shipped to a customer. In particular, it is often the case that stringent quality assurance testing for software needs to be performed very early in the hardware development life cycle, that is, while the hardware platforms are still being developed. An adverse consequence of software failing at least one quality assurance test is that the shipment date for the client computer may be delayed significantly. Therefore, to meet shipment time scales, all software preloaded onto hardware to be shipped must have undergone and passed appropriate quality assurance testing. However, applying such a criterion as a condition precedent to be satisfied prior to loading software onto a computer can, in some circumstances, limit the range or functionality of software that is available to a customer who purchases a client machine. Furthermore, developing and pre-loading quality assured software at an early stage in the hardware development life cycle can represent a significant financial burden.

It is an object of the present invention at least to mitigate some of the problems of the prior art.

Accordingly, a first aspect of the present invention provides a method of manufacturing a first computer having a storage medium; the method comprising the steps of
storing on the storage medium a first file in an unusable form; the unusable form being such that the first file cannot be used, without further processing, for a predetermined purpose;
transmitting, from the first computer to the second computer, a request, comprising identification data associated with at least one of the first computer and the first file, for access to the first file;
receiving, at a second computer, the request and identification data;
determining from the identification data whether or not the first file should be converted to a usable form;
transmitting, from the second computer to the first computer, a communication to enable the conversion of the first file to the usable form, if the determination is such that the first file should be converted to the usable form;
receiving, at the first computer, the communication from the second computer to convert the file from an unusable form to the usable form; and
converting, in response to receiving the communication, the first file from the unusable form to the usable form in which the first file can be used for the predetermined purpose.

Advantageously, the present invention allows a file representing, for example, software that has not passed a quality assurance test, to be pre-loaded onto a machine in a form such that it cannot be used or executed which, in turn, does not delay shipment of the machine by requiring, prior to shipment, appropriate pre-load quality assurance testing to have been undertaken and passed. This process, in the event of the software failing a quality assurance test, avoids delaying shipment of a machine.

A second aspect of the present invention provides a method of manufacturing a computer comprising a storage medium; the method comprising the steps of
storing a first file in an unusable form on the storage medium, the first file being amenable to being converted to a usable form in which the first file can be used for a predetermined purpose; and
shipping the computer from a manufacturing facility in a condition such that the first file is in the unusable form.

Since the file cannot be used inadvertently by a user, the manufacturing process for a computer is not delayed by the extensive and expensive quality assurance testing that conventionally takes place very early in the development cycle of a new hardware platform.

Preferably, an embodiment provides a method further comprising the step of subjecting, at least after the step of storing, and optionally after shipping, the first file in the usable form to at least one predetermined test upon a computer other than the first computer.

A still further advantage of embodiments of the present invention is the realisation of a significantly reduced time and amount of traffic that needs to be exchanged between the client machine and a remote server to produce at the client machine a quality assured software product. Hence, the typically long download times associated with prior art webbased support and maintenance services are avoided. In particular, the need to download a large application or file is avoided.

It will be appreciated that the user of a client machine may be located within a different country to the server via which they are obtaining, for example, support services.

Suitably, a further aspect of the present invention provides a method of distributing a file for a first computer, the first computer comprising a storage medium storing a first file on the storage medium in an unusable form; the unusable form being such that the first file cannot be used, without further processing, for a predetermined purpose; the method comprising the steps of:
transmitting, to a second computer, a request for access to the first file in the usable form; and
converting, in response to receiving a communication from the second computer, the first file from the unusable form to a usable form in which the first file can be used for the predetermined purpose.

It will be appreciated that the step of converting a file that is already resident on the storage medium of the computer from an unusable form to a usable form avoids the conventional downloads that are associated with obtaining on-line support and maintenance assistance.

Due to the files being stored in an unusable form the risk that a user of the computer will invoke inadvertently the pre-loaded file is reduced substantially, and preferably minimised.

An embodiment preferably provides a method in which the step of converting comprises at least changing the file name to render the first file usable. Preferably, the step of changing the file name comprises the step of changing a file extension of the first file. If the file in the usable form is intended to be, for example, software, an embodiment preferably provides a method in which the step of changing the file extension comprises changing the file extension such that the file becomes an executable file.

It will be appreciated that in some instances a user may not have the requisite access permissions to change the attributes of a file. Suitably, an embodiment provides a method in which the file, having a name in a first format, is copied to a file having a name complying with a second format. Preferably, an embodiment provides for copying a file having a X.dat format to a file having a X.exe format. It can be appreciated that such a method avoids the need for a user to have appropriate access permissions to file attributes to produce a file capable of performing an intended or predetermined function.

The use of such an elegant technique to enable a file, that is, to render a file usable by changing the file extension allows the amount of data to be exchanged between a client and a server to produce at the client a useable form of the file to be reduced substantially as compared to having to download the file in a usable form from the server. Having changed the file extension to an extension that will be recognised by, for example, other software, such as an operating system or an application, the file can be applied or used for the predetermined purpose.

It will be appreciated that the above is applicable equally to, for example, data files. Suitably, embodiments preferably provide a method in which the step of changing the file extension comprises changing the file extension such that the file becomes a data file. The data file may represent, for example, multi-media or audio/visual content.

The client machine preferably interacts with a server. Accordingly, a third aspect of the present invention provides a method of facilitating access to a first file stored on a storage medium of a first computer; the first file being stored in an unusable form and is amenable to conversion to a usable form in which the first file can be used for a predetermined purpose; the method comprising the steps of
receiving, at a second computer, identification data associated with at least one of the first computer and the first file;
determining from the identification data whether or not the first file should be converted to the usable form; and
transmitting, to the first computer, data to enable the conversion of the first file from the unusable form to the usable form.

Preferably, an embodiment provides a method in which the step of determining comprises the step of accessing, using the identification data, a database comprising data relating to the configuration of the first computer including an indication of whether or not the first file should be allowed to be converted to the usable form;
determining from the data whether or not the first file in the usable form has passed at least one predetermined test; and
transmitting data to the first computer to convert the first file from the unusable form to a usable form if it was determined that the first file in the usable form had passed the at least one predetermined test.

If the file that was pre-loaded, prior to shipment, onto the storage medium of a computer does not, in that form, pass any subsequent testing such as various quality assurance testing, that pre-loaded file cannot or at least should not be used.

Therefore, an embodiment provides a method further comprising the steps of
accessing, using the identification data, a database comprising data relating to the configuration of the first computer which includes an indication of whether or not the first file in the usable form has passed at least one predetermined test;
determining from the data base whether or not the first file in the usable form has passed at least one predetermined test; and
transmitting, to the first computer, an updated version of the first file, which has passed the at least one predetermined test, if it was determined that the first file in the usable form had not passed the at least one predetermined test.

Hence, only the most recently approved version of the file is used by a user of the machine.

It will be appreciated that software is developed generally in a modular manner. Therefore, each module may be amenable to being tested and approved independently of other modules forming software as a whole. Hence, a still further aspect of the present invention provides a method in which the first file comprises at least two portions; the method further comprising the steps of
determining, at the second computer, whether or not at least one of the two portions has passed respective predetermined tests; and
transmitting, to the first computer, that portion of the two portions which had not passed the respective predetermined test.

Preferably, an embodiment provides a method in which the step of transmitting, to the first computer, that portion which had not passed the respective predetermined test, is executed before at least the step of converting the first file from an unusable form to a usable form.

It will be appreciated that even though the software, or file, as a whole may be deemed to have failed an appropriate quality assurance test, the need to download the complete file is avoided by only updating or downloading those modules of the software or file which caused the failure.

Embodiments of the present invention will now be described, by way of example only, with reference to the accompanying drawings in which:
figure 1 shows schematically system components used in implementing a method or system according to the present invention;
figure 2 shows a flow chart of an embodiment; and
figure 3 shows a flow chart to synchronise or update files at a client machine according to a further embodiment.

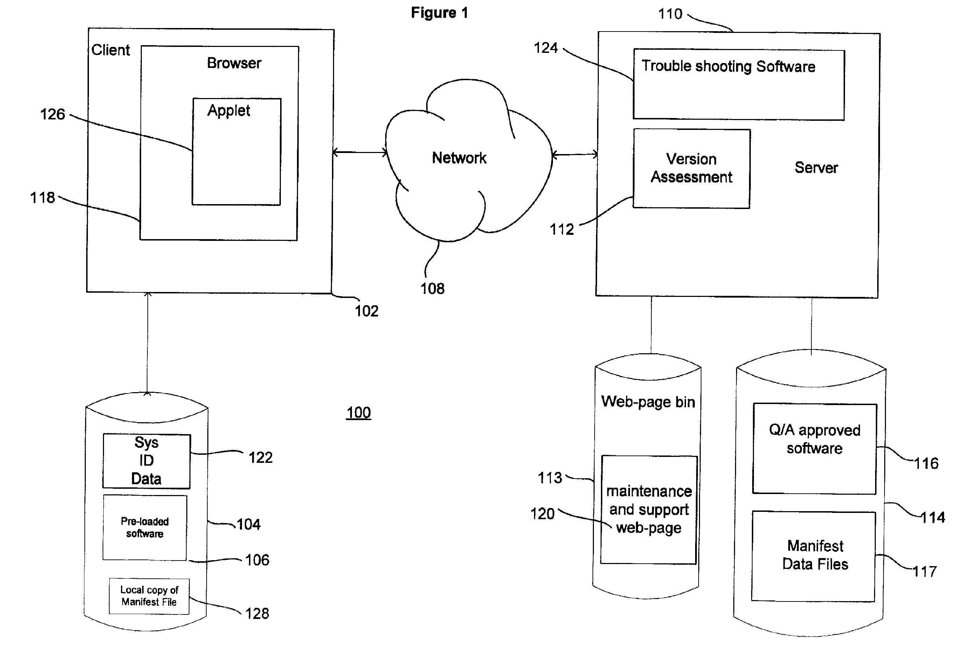

Referring to figure 1 there is shown a system 100 including a client machine 102 which has an associated storage medium 104 comprising, for example, diagnostic or trouble-shooting software 106, in a disabled, that is, unexecutable or unusable, form. The disabled software 106 has been pre-loaded prior to shipment of the client machines 102 without that software having passed the conventional appropriate quality assurance testing that is normally required before software is allowed to be loaded onto the computer.

It will be appreciated by one skilled in the art that a file is deemed to be usable within the context of embodiments of the present invention if the file, if invoked, can be used for or used to perform an intended or predetermined purpose or function. The predetermined purpose or function is that function or purpose for which the author of the file created the file. A file is deemed to be unusable within the context of embodiments of the present invention if the file is not usable, that is, the file, if invoked, cannot be used for or used to perform an intended or predetermined purpose or function. Again, the predetermined purpose or function is that function or purpose for which the author of the file created the file. References to a file being enabled or disabled shall be construed in light of the above.

The client computer 102 is shown as being connected to a communications network 108 such as, for example, the Internet. The client machine 102 can access, via the network 108, a server 110, such as, for example, a support and maintenance server, which stores a number of files 116 that can be used to update the software that is resident upon the storage medium 104 of the client 102 or that is resident within the client machine or resident on a device connected to or forming part of the client machine. The files 116 are stored on the server in an associated database 114, that is, file repository, which also contains an indication of whether or not the files have been approved from a quality assurance perspective. Preferably, the files 116 represent quality assured software.

Typically, a user wishing to perform a diagnostics check or to update software resident on their client machine 102 would utilise a web browser 118 to access an appropriate maintenance web-page 120 resident on the server 110. The web-page 120 is stored typically within a web-page directory 113. The web-page loads a program, preferably a trusted applet, into the browser 118 that can interrogate or retrieve system identification data 122 of the client machine 102. The system identification data 122 is transmitted to the server for processing via version assessment software 112. The version assessment software 112 retrieves from the database 114 a manifest file 117 which corresponds to the retrieved system identification data 122. The manifest file provides an indication of the software that is currently loaded on the client machine 102 together with an indication of whether or not that software has been approved from a quality assurance perspective.

The manifest data also contains an indication of the status of any software that has been pre-loaded or subsequently loaded onto the client machine 102. The status information provides an indication of whether or not any disabled, pre-loaded, software, such as, for example, pre-loaded diagnostics software 106, has been enabled after shipment of the client machine 102.

If the version assessment software 112 determines that the pre-loaded software 106 has not been enabled, action is taken by the server to enable the pre-loaded software 106. Firstly, a determination is made as to whether or not the pre-loaded software has passed appropriate quality assurance testing after loading onto or after shipment of the computer 102. If the pre-loaded software 106 has passed such quality assurance testing, the server 110 transmits appropriate information to the applet 126 within the web-browser 118 of the client machine 102 which can be used to enable the pre-loaded software 106. Upon receipt of the appropriate information, the applet 126 undertakes the necessary steps to enable the pre-loaded software to allow it to be executed or to be used for a predetermined purpose at the client machine. In an embodiment, the appropriate information may comprise an identification of the pre-loaded software and/or data representing an instruction or command for the applet 126 to render the pre-loaded file capable of use. Such information may comprise a relatively small number of bytes.

It will be appreciated that the time taken to transmit such data, from the server 110 to the applet 126, to enable the pre-loaded software 106 will be significantly less than the time that would have been taken to transmit the software from the server 110 to the client machine 102, depending upon the size of the software to be transmitted and the data rate of the link between the client machine 102 and the server 110.

Conventionally, software to be pre-loaded onto a machine prior to shipment, should be pre-loaded at a relatively early stage in the manufacturing cycle of the machine so that the software can be tested comprehensively. However, since the software can be pre-loaded in a disabled form without having to pass such quality assurance testing prior to shipment, the software can be pre-loaded much later in the manufacturing cycle than conventionally. It can also be appreciated that since the pre-loaded software has been loaded onto the client machine 102 without having to have passed any or all quality assurance tests, the quality assurance testing of such pre-loaded software can take place a significant period of time later than the initial loading of the software onto the storage medium 104. As will be appreciated by those skilled in the art, performing quality assurance testing at a relatively late stage in a product development cycle bears the benefit of significantly reduced quality assurance testing costs since, as the hardware platform development cycle progresses, there is a significantly reduced likelihood that the hardware platform will change to such an extent as to require significant software modification and associated quality assurance re-testing.

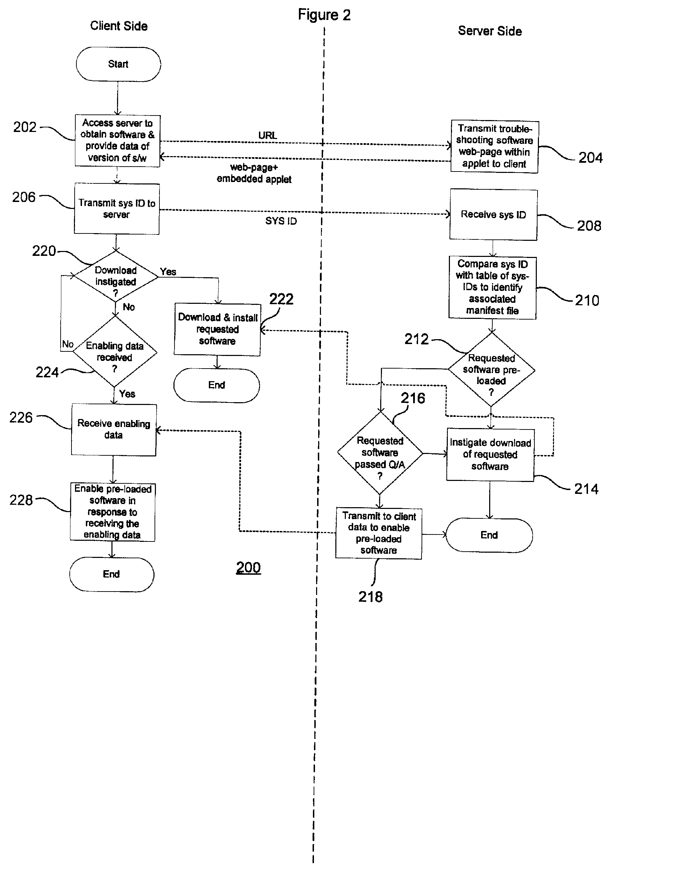

Referring to figure 2, there is shown an embodiment of a flow chart 200 that illustrates the processing undertaken by the client machine 102 and the server 110 when, for example, a user of the client machine 102 attempts to download software from the server 110. The software may represent, for example, updated drivers for or new software intended to be installed upon the client machine 102.

At step 202 the client machine 102 accesses a web-page 120 of the server 110 using an appropriate URL. In response to receiving the get command containing the URL, the server 110 transmits the web-page 120 to the client machine 102 so that it can be rendered by the browser 118. The web-page 120 comprises an embedded trusted applet 126 which retrieves at the client machine 102 a unique identification code, that is, the system identification data 122, associated with the client machine 102. The applet 126 transmits the system identification data 122 to the server 110 at step 206. At steps 208 and 210 the server 110 receives the system identification data 122 and identifies, within the data base 114, a manifest file 117 that provides an indication of the current configuration of the client machine 102 corresponding to the system identification data 122. Preferably, the get command also contains an indication of a requested software or service. Hence, it is determined at step 212 whether or not the requested software, or software required for the requested service, has been pre-loaded, before shipment, onto the storage medium 104 of the client machine 102. If the requested software has not been pre-loaded onto the storage medium 104 of the client machine 102, a download of the appropriate software is instigated at step 214 in the conventional manner.

However, if it is determined at step 212 that the requested software has been pre-loaded in a disabled form onto the storage medium 104 of the client machine 102, it is determined whether or not the pre-loaded software has, after shipment or after having been pre-loaded, been approved from a quality assurance perspective. The server 110 identifies the latest quality approved version information of the requested software from the Q/A approved data base 116 and compares that version information with the version information contained within the manifest file 117 for the client machine 102.

If the version of the pre-loaded, disabled, software has not been approved after shipment or after having been pre-loaded, the requested software, that is, an approved version, preferably, is retrieved by the server 110 from the Q/A approved software data base 116 and downloaded to the client machine 102 at step 214 in the conventional manner.

However, if it is determined at step 216 that the pre-loaded but disabled software has been approved after shipment, or, preferably, at least after having been loaded in a disabled form upon the client machine 102, data is transmitted at step 218 from the server 110 to the applet 126 instructing the latter to enable the pre-loaded software.

It can be appreciated from figure 2 that the client machine 102 performs corresponding actions to those undertaken by the server 110. Therefore, it can be seen that if the server instigates a download of the requested software at step 214, the client machine 102 detects the instigation of the download at step 220 and receives and installs the requested software at step 222. After any such download, the user can execute the downloaded software in the conventional manner.

If a download is not detected at step 220, the client machine 102 determines, at step 224, whether enabling data or an enable command has been received from the server. In the event that enabling data or an enabling command has not been received, control returns to step 220. However, if the server 110 transmits enabling data or an enabling command at step 218 to the embedded applet 126. The applet, at steps 226 and 228, receives the enabling data or enabling command and takes appropriate action to render the pre-loaded software accessible or executable, that is, the pre-loaded file is render capable of use for its intended purpose.

In an embodiment, the pre-loaded software 106 is pre-loaded onto the storage medium 104 as a data file, that is, as a *.DAT file. It will be appreciated that due to the .DAT extension, this file will not be treated by an operating system (not shown) as an executable file. The file will be treated as a mere data file. The applet 126 transmitted from the server 110 is such that the applet 126 can operate out of the sand-box. The applet 126 changes the .DAT extension of the pre-loaded software 106 to a .EXE extension so that the operating system will treat the file as containing executable code. Thereafter, a user may execute the pre-loaded software 106 in the conventional manner.

Conventionally, software is designed and written in a modular manner. Such an approach has the advantage that individual modules can be tested and approved from, for example, a quality assurance perspective independently of the other modules. For example, diagnostics software may comprise separate modules for testing a DVD decoder card, various aspects of a motherboard, a storage device or a communications device. Each of those modules can be written and approved independently of one another. The overall diagnostics software can use the modules via appropriate dll calls. It will be appreciated that it would be undesirable to have to download the complete diagnostics software simply because a single dll failed a corresponding QA test. Suitably, an embodiment preferably or additionally provides for the synchronisation, that is, updating, of at least a portion of the pre-loaded software prior to enablement of that software.

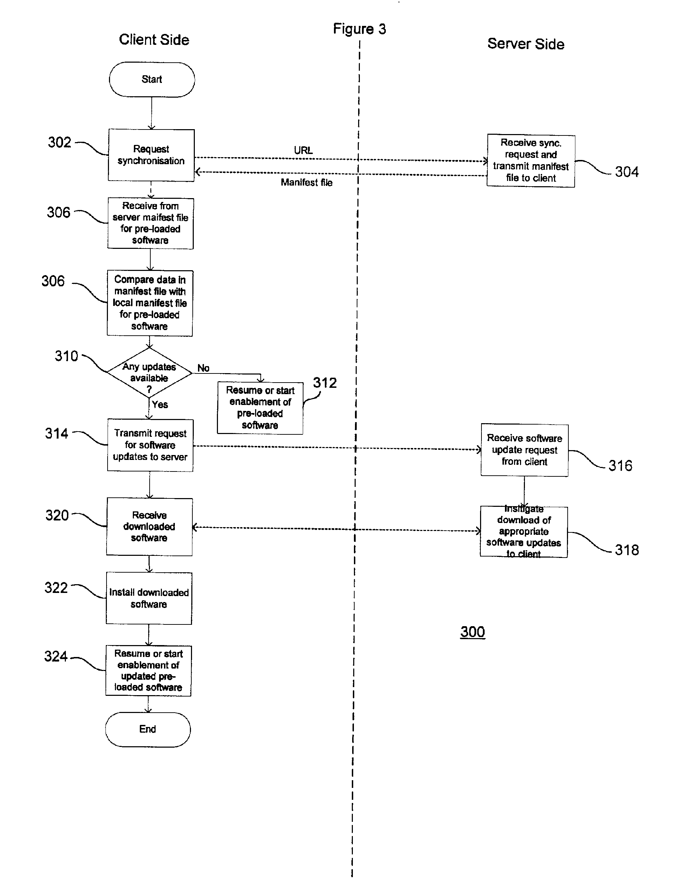

Referring to figure 3 there is shown a flow chart 300 for synchronising, that is, updating at least aspects of the pre-loaded software 106. At step 302, the client machine 102 transmits a request to the server 110 for synchronisation of the pre-loaded software. At the server side, the server 110 retrieves and transmits, at step 304, a manifest file, that is, a file containing data relating to the most up to date version of the functional elements, such as *.DLL and *.EXE files, for the pre-loaded software. The client machine 102 receives the manifest file 117 from the server 110 at step 306 and a comparison is made between the data in the received manifest file with a locally stored manifest file 128 relating to the pre-loaded software 106 at step 308. A determination is made at step 310 as to whether or not any of the software elements of the pre-loaded software 106 should be updated. If the determination at step 310 shows that the pre-loaded software is currently in the most up to date form, the synchronisation process is terminated and, optionally, the enablement of the pre-loaded software is resumed or commenced at step 312. However, if the determination at step 310 shows a requirement for software updates for the pre-loaded software 106, processing continues at step 314 where requests are transmitted to the server 110 to download the updated relevant library calls and routines. If the server 110 receives such a software update request from the client 102 at step 316, a download of the requested software updates to the client 102 is instigated at step 318.

The client 102 receives and installs the downloaded software updates at steps 320 and 322. Once the downloaded software updates have been appropriately installed, the synchronisation process is terminated and, optionally, the enablement of the pre-loaded software, in its updated form, is commenced or resumed at step 324.

In an embodiment it will be appreciated that the synchronisation process illustrated in the flow chart 300 of figure 3 may be suitably inserted between steps 216 and 218 of the flow chart 200 illustrated in figure 2.

Since each updated software routine or dll call will be very likely to comprise significantly fewer bytes than the overall diagnostics software, the time taken to render at the client machine 102, enabled software or an enabled file will be significantly less than the time taken to download the complete software or complete file.

Although the above embodiments have been described in the context of pre-loading diagnostics software, the present invention is not limited thereto. Embodiments can be realised which pre-load any type of software in a disabled form prior to that software having undergone and passed appropriate quality assurance testing. Once that software has undergone and passed the relevant quality assurance testing, that software can be enabled via, for example, an applet that is received via a suitable server. Suitably, the manufacturing process and shipment dates for hardware platforms are not affected adversely by quality assurance testing of software for those platforms.

It can be seen that the above embodiments render the pre-loaded software executable by changing the file extension from a .DAT extension to a .EXE extension. However, it will be appreciated that other forms of enabling the software can equally well be used. For example, the pre-loaded file may have been compressed or encrypted using a suitable encryption key. Therefore, the data transmitted from the server 110 to the client machine 102 may be a key to enable decryption or decompression of the pre-loaded file.

Still further, although the above embodiments have been described with reference to enabling software that has been pre-loaded onto a computer before that software has been approved, the present invention is not limited thereto. Embodiments can equally well be realised in which the pre-loaded file represents, for example, data that can be used by software. For example, a virus scanning engine often uses a data file to ensure that the most recent viruses can be detected and cured. It will be appreciated that a beta form of such a data file may be available at shipment for pre-loading in addition to the current alpha-form of the data file. Therefore, the beta data file can be pre-loaded in a disabled form and subsequently enabled once appropriate testing has been undertaken for the beta data file.

It will be appreciated that an unusable file is a file which cannot be used, without corrective action being taken, for its intended purpose. For example, the unusable file may represent the above described software that has been rendered unexecutable by storing the software with a .DAT extension rather than a .EXE extension. Alternatively or additionally, the unusable file may represent a file that, once appropriate corrective action has been taken, can be used by other software. For example, if the above mentioned virus data definition file has been pre-loaded in a compressed form, that file can be enabled, that is, rendered usable by other software, by suitable decompression. In both instances, the executable software or the virus data definition file can be pre-loaded onto a computer without fear of the software or data file being inadvertently invoked or used by a user of the computer. Hence, there is little or no need to ensure that the software or data file operates perfectly or as intended before loading onto the storage medium. Still further the pre-loaded file, in a useable form, may be a multi-media file or may represent image files or some other form of digital content etc.

Although the above embodiments have been realised by transmitting system identification data to the server and the server performing the comparison with the manifest file, embodiments can be realised in which the server merely retrieves the manifest file and transmits that file to the applet which then performs the assessment, that is, the comparison between the manifest file data and the system identification data, to determine whether or not the pre-loaded software should be enabled. It will be appreciated that such local processing at the client machine will reduce significantly the processing load at the server.

Furthermore, the applet, rather than or in addition to sending the system identification data, can read and determine the attributes of the pre-loaded file directly and either forward those read attributes to the server or use those read attributes in performing the assessment as to whether or not the pre-loaded file should be rendered usable.

Still further, although the above embodiments have been described with reference to an applet undertaking the actions of retrieving the system identification data, the embodiments are not limited to such an arrangement. Embodiments can be realised in which, for example, ActiveX technology is used to perform equivalent functions to the above described applet.

The embodiments of the present invention can also be adapted such that quality approved software, data or other files can be pre-loaded in a disabled form onto a storage medium before shipment of a client machine. The pre-loaded software, data or other files can be enabled after shipment. Such a process would allow vendors of software or digital content to distribute their products and sell access permissions to allow the pre-loaded software, data or other files to be used as appropriate. It will be appreciated that the vendor gains the significant advantage that the user may be inclined to enable the already resident pre-loaded software, data or file in preference to downloading or purchasing a competing product.

The above embodiments have been described with reference to an applet operating either outside of or within the socalled sand-box. However, the embodiments are not limited to such a Java based technology. Embodiments can be realised in which some other form of object or entity, which operates in a constrained or confined run-time environment or manner, can be trusted to undertake the necessary actions in relation to converting the file from an unusable for to a usable form.

## Claims

1. A method of distributing a file for a first computer, the computer comprising a storage medium storing a first file in an unusable form; the unusable form being such that the first file cannot be used, without further processing, for a predetermined purpose, the method comprising the steps of:
transmitting, to a second computer, a request for access to the first file in the usable form; and
converting, in response to receiving a communication from the second computer, the first file from the unusable form to a usable form in which the first file can be used for the predetermined purpose.

2. A method as claimed in claim 1 in which the step of converting comprises the step of at least changing the name of the first file to render the first file usable.

3. A method as claimed in claim 2 in which the step of changing the file name comprises the step of changing a file extension of the first file.

4. A method as claimed in claim 3 in which the step of changing the file extension comprises changing the file extension such that the file becomes an executable file.

5. A method as claimed in claim 3 in which the step of changing the file extension comprises changing the file extension such that the file becomes at least one of a data file, a multi-media file or a digital content file.

6. A method as claimed in any preceding claim in which the step of receiving the communication comprises receiving data to be used to convert the first file from the unusable form to the usable form.

7. A method as claimed in claim 6 in which the received data comprises decryption data to decrypt the first file; the method further comprising the step of decrypting the first file.

8. A method as claimed in any preceding claim in which the step of converting comprises the step of decompressing the first file to produce a decompressed file that can be used for the predetermined purpose.

9. A method as claimed in any preceding claim in which the first file was stored on the storage medium in the unusable form on a date prior to the usable form of the first file having passed at least one predetermined test.

10. A method as claimed in claim 9 in which the at least one predetermined test comprises a quality assurance test.

11. A method as claimed in any preceding claim in which the first file was stored on the storage medium in the unusable form at a date prior to the computer leaving a manufacturing facility.

12. A method as claimed in any preceding claim in which the storage medium is integral to the computer.

13. A method of facilitating access to a first file stored on a storage medium of a first computer; the first file being stored in an unusable form but being amenable to conversion to a usable form in which the first file can be used for a predetermined purpose; the method comprising the steps of
receiving, at a second computer, identification data associated with at least one of the first computer and the first file;
determining from the identification data whether or not the first file should be converted to the usable form; and
transmitting, to the first computer, data to enable the conversion of the first file from the unusable form to the usable form.

14. A method as claimed in claim 13 in which the step of determining comprises the step of
accessing, using the identification data, a database comprising data relating to the configuration of the first computer;
determining from the database whether or not the first file in the usable form has passed at least one predetermined test; and
transmitting data to the first computer to convert the first file from the unusable form to a usable form if it was determined that the first file in the usable form had passed the at least one predetermined test.

15. A method as claimed in claim 13 further comprising the steps of
accessing a database comprising data relating to the configuration of the first computer using the identification data;
determining from the database whether or not the first file in the usable form has passed at least one predetermined test; and
transmitting, to the first computer, an updated version of the first file, which has passed the at least one predetermined test, if it was determined that the first file in the usable form had not passed the at least one predetermined test.

16. A computer system comprising means adapted to implement a method as claimed in any preceding claim.

17. A computer program element comprising computer program code means for implementing a system or method as claimed in any preceding claim.

18. A computer program product comprising a computer readable storage medium having stored thereon a computer program element as claimed in claim 17.

19. A method of manufacturing a computer comprising a storage medium; the method comprising the steps of
storing a first file in an unusable form on the storage medium, the first file being amenable to being converted to a usable form in which the first file can be used for an intended purpose; and
shipping the computer from a manufacturing facility in a condition such that the first file is in the unusable form.

20. A method as claimed in claim 19 further comprising the step of subjecting, after shipping or storing, the first file in the usable form to at least one predetermined test.

21. A method as claimed in claim 20 in which the step of subjecting the first file to the at least one predetermined test comprises the steps of
determining whether or not the first file in the usable form meets at least one criterion; and
recording in a database of a second computer an indication of whether or not the first file in the usable form met that criterion.

22. A method as claimed in either of claims 20 and 21 further comprising the steps of
receiving, at the second computer, a request from the first computer for access to the first file;
determining from the database whether or not the first file in the usable form passed the first criterion; and
transmitting, from the second computer to the first computer, data to convert the first file from the unusable form to the usable form.

23. A method as claimed in claim 22 further comprising the steps of
receiving the data to convert the first file from the unusable form to the usable form; and
converting, in response to receiving said data, the first file from the unusable form to the usable form.

24. A method as claimed in claim 23 in which the step of converting comprises at least changing the file name to render the first file usable.

25. A method as claimed in claim 24 in which the step of changing the file name comprises the step of changing a file extension of the first file.

26. A method as claimed in claim 25 in which the step of changing the file extension comprises changing the file extension such that the file becomes an executable file.

27. A method as claimed in claim 25 in which the step of changing the file extension comprises changing the file extension such that the file becomes a data file.
